# EUROPEAN PATENT APPLICATION

(11) **EP 1 386 712 A1**
(43) Date of publication of application: **04.02.2004**
(21) Application number: 03009885.9
(22) Date of filing: 15.05.2003
(51) Int. Cl.: B29C 45/00, B65D 39/00

(54) **Mould for making plastic stoppers provided with hinged covers**

(30) Priority: 02.08.2002 IT BO20020509
(71) Applicant: BVA S.r.l., 40050 Quarto Inferiore (Bologna) (IT)
(72) Inventor: Annovi, Bruno, 40069 Zola Predosa (Bologna) (IT); Malavasi, Villiam, 40069 Zola Predosa (Bologna) (IT); Roncarati, Mirko, 40065 Pianoro (Bologna) (IT); Cassoli Mario, 40069 Zola Predosa (Bologna) (IT)
(74) Representative: Dall'Olio, Giancarlo

(57) **Abstract**

A mould (S) for making stoppers (4) provided with hinged covers (5) comprises a first mould member (1) and a second mould member (2), reciprocally movable from a closed position to an open position and vice-versa.

In the first mould member (1) is embedded the present closing device, which operates after the mould (S) has been opened and before the stoppers (4) are ejected from the mould (S).

The closing device comprises a series of idle rollers (5), guided by cams (7), movable from an idle position (R) to an end position (T) on an active trajectory during which they engage the covers (5) and pivot them until they close the stoppers (4).

## Description

The present invention fits into the technical sector relating to injection moulds for making plastic stoppers.

More particularly, the stoppers which will be referred to are suitably applied to containers for liquid products, e.g. bottles or the like. They are provided with a cover, hinged to the stopper main body, which can be opened for pouring said liquid, and subsequently closed for protecting the remaining product.

The aforesaid stoppers are obtained by moulding them in a multi-print mould, with their covers in an open configuration, because of feasibility purposes. With each mould operation a pre-defined number of stoppers are obtained. The larger is the number of stoppers produced with a single moulding operation, the greater is the process productivity and the lower are the corresponding production costs.

Once moulded, a stopper is generally mounted on a corresponding container by means of a suitable operating member of an automatic apparatus, which is a part of a filling and packaging line for a liquid product.

In order to allow the aforesaid operating member to mount the stopper on a container, it is nevertheless necessary to set the hinged cover to its closed position. It is therefore necessary, after the moulding operation, to close the stoppers before they are mounted on the containers.

For this purpose, the prints made on a mould are arranged in rows. The covers are arranged side by side, respectively aligned and oriented so that they can be simultaneously engaged by an auxiliary closing device, mounted outside of the mould. The auxiliary device operates after the mould has been opened, and after that stoppers extracting means in the mould has pushed out the moulded stoppers from their prints, for closing the covers.

In known art moulds, the above mentioned auxiliary closing device comprises a pivoting blade, movable from outside toward the inside of the mould. During its course, the blade engages the covers on a row and rotates them until they are closed.

The aforesaid technical solution allows only a maximum of two print rows to be made on a mould. Said prints are arranged so that the covers are oriented outwards. In this way the auxiliary closing device comprises two blades, symmetrically arranged on opposite sides of the mould, each one of whose intercepts a corresponding row of covers for closing.

The above described, unavoidable configuration, doesn't allow to optimise the mould size for a given number of prints. In fact, with only two rows of prints, increasing the number of prints would lead to a corresponding increase in the mould length. As it is greatly suitable to limit the overall mould length, in order to limit the mould costs and the complexity of its internal devices, the known art moulds are normally limited to 16 prints (2 rows by 8 prints each) or 24 prints (2X12). The above figures represent a heavy limitation for the productivity of the stopper manufacturing processes.

A further drawback arises from the fact that the shape and size of said auxiliary devices and of their related operating mechanism significantly increase the overall width of the mould.

It is an object of the present invention to provide a mould including a closing device, able to close the stoppers covers after they have been moulded, located inside the same mould.

Another object of this invention is to provide a mould able to maximize the number of prints made in the same mould, according to the characteristic features of the above closing device.

Yet another object of this invention is to operate the aforesaid closing device by means of the same operating mechanisms already provided in a known art mould for operating its extracting means, so that the operating phases of these latter means and of the closing device can be automatically set to optimum, and in order to simplify the mould internal structure.

The aforesaid objects are completely obtained by a mould constructed according to the contents of the appended Claims.

The characteristic features of said mould, which form the core of the present invention, will be apparent in the following detailed description of a preferred embodiment of the invention, according to the Claims contents and with the support of the drawings attached thereto, wherein:

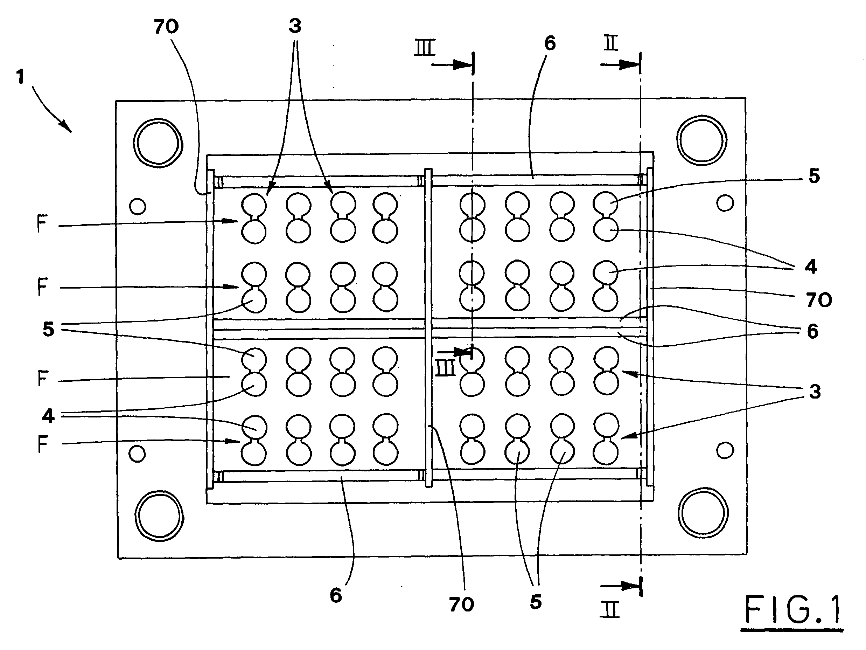

- figure 1 shows a schematic front view of a mould part comprising the extracting members and the covers closing device;
- figure 2 shows a sectional view according to the section line II-II of figure 1, with some parts missing for clarity purposes;
- figure 3 shows partially, at an enlarged scale, a sectional view according to the section line III-III of figure 1, with the mould in its closed position;
- figures 3A,3B and 3C show subsequent cover closing phases, with the mould open;
- figure 4 shows a side view of the whole mould in its closed position;
- figures 4A,4B and 4C show side views of the mould in an open configuration, respectively corresponding to the operating phases shown in figures 2A,3B and 3C.

Referring now to the above drawings, letter S indicates a mould according to the present invention, which comprises a first mould member 1 and a second mould member 2.

Mould S features a plurality of prints 3. The shape of each print 3 is defined, in a well known way, by coupling of complementary half-prints of the first and second mould members 1,2. After injection of a plastic material into said prints 3, corresponding stoppers 4 are obtained, having a cover 5 hinged thereto, which cover 5 is arranged in a 180° open configuration.

The mould S operating position is that the coupling plane of its first and second members 1,2 is vertical, in order to make the stoppers ejection easier. This feature will be explained in more detail in the following.

The first and second mould members 1,2 are mounted, in a known way, on a bearing frame, not shown, which is provided with devices able to mutually move away and approach together the same mould members 1,2 for respectively open and close the mould S, while keeping a perfect mutual alignment between them.

The bearing frame is provided, again in a known way, of linear actuators 10, arranged in said first mould member 1 with their axis parallel to the stoppers 4 axis; in the known art moulds, these actuators 10 are aimed to operate the moulded piece extracting means.

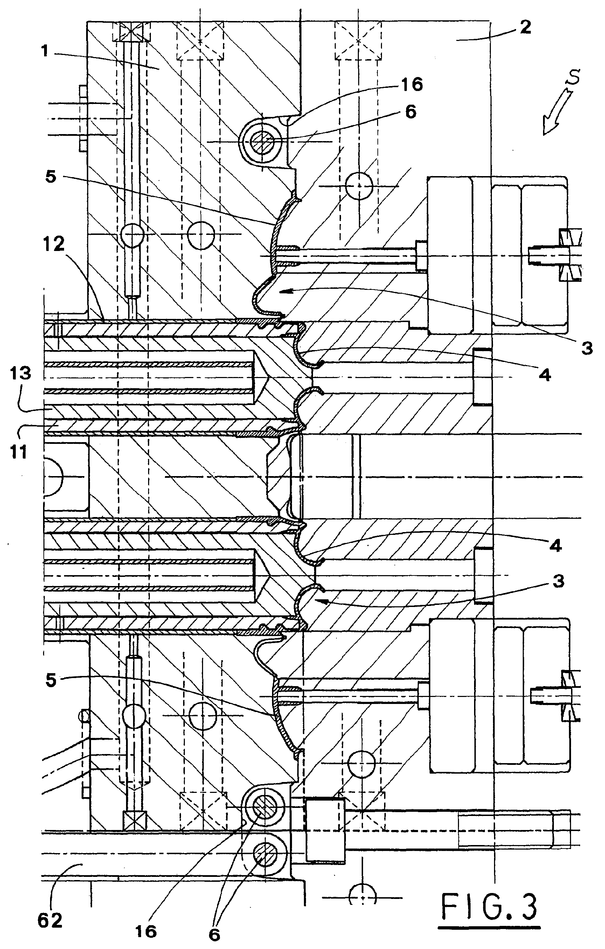

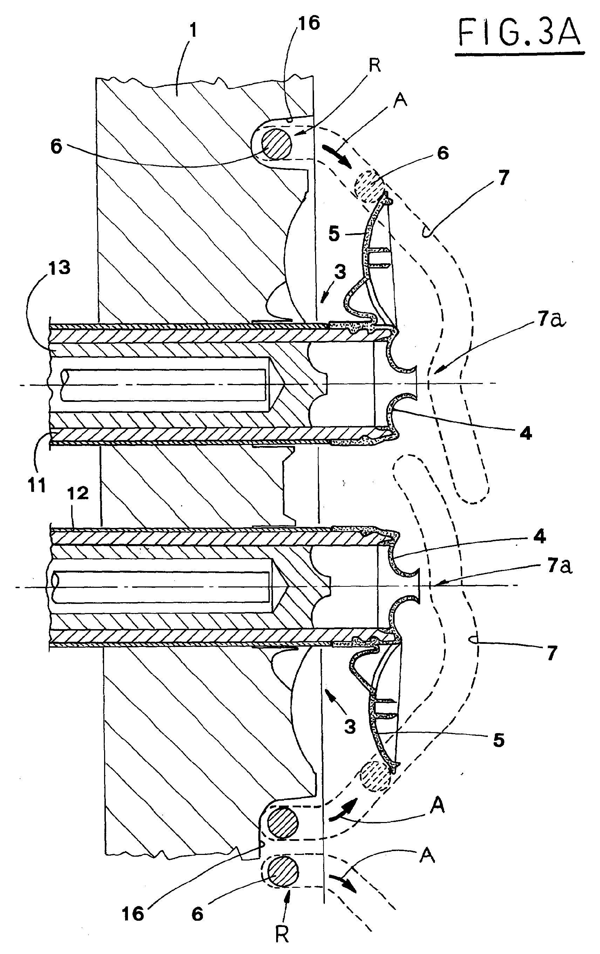

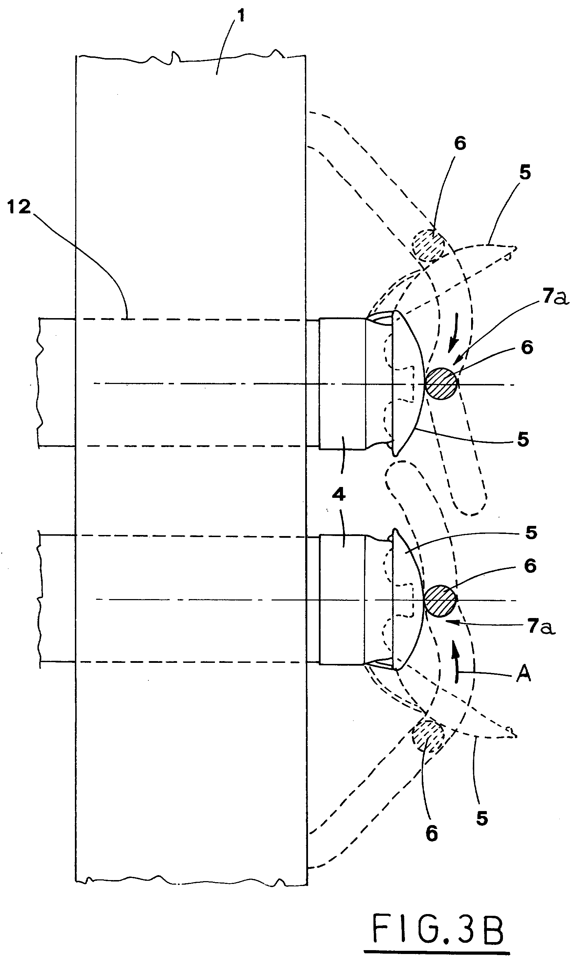

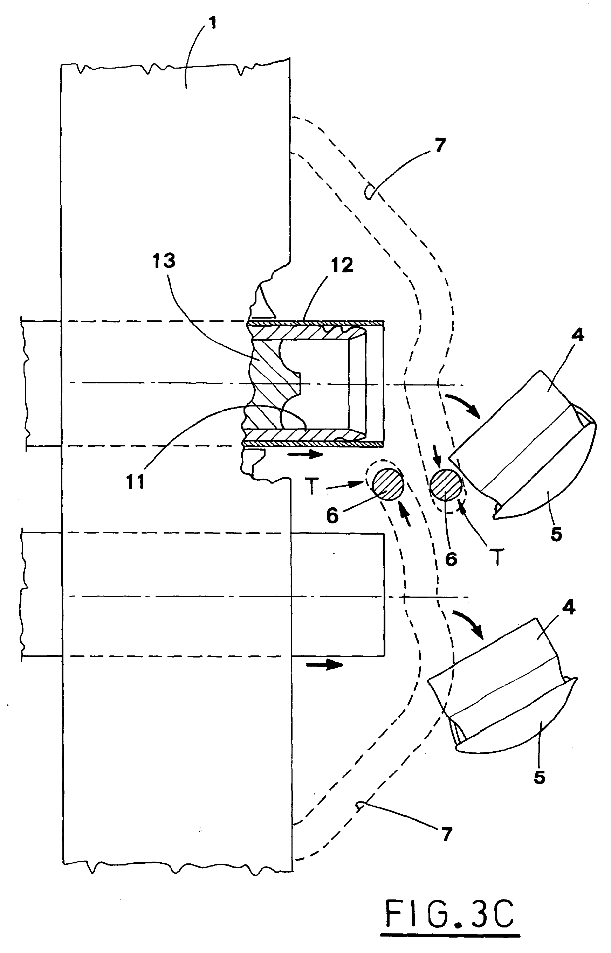

In the above first mould member 1, for each one of said prints 3, first and second extracting members 11,12 are provided. They comprise, in a known way, two cylinders co-axially arranged with respect to the stopper 4, and with respect to a inner member 13, which is integral with the first mould member 1 and which is shaped in its external surface so that it defines the central portion of the same stopper 4 (see figures 3 and 3A).

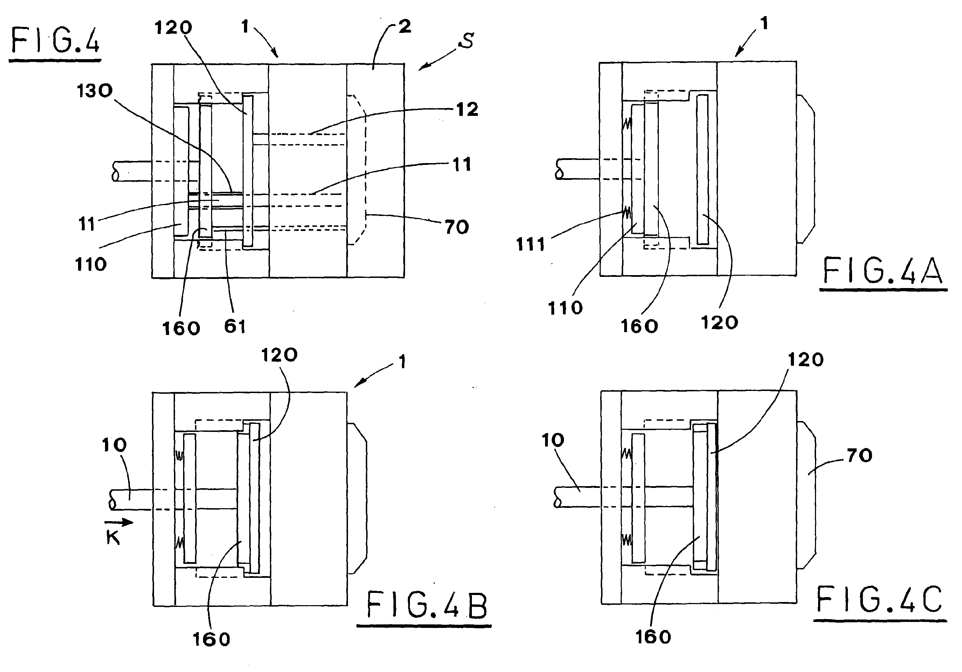

All the first outer extracting members 11 are connected to a unique first operating plate 110, fit to simultaneously operate all of them according to an axial direction between two end positions, respectively retracted, while the mould S is closed (see figures 3 and 4) and extracted, while the mould S is open (see figures 3A and 4A).

The above first operating plate 110 is arranged perpendicularly with respect to the first outer extracting members 11 and it is reciprocally operated by springs 111 and by operating stems, not shown.

When the mould S is close, its second member 2 urges against the operating stems which, in turn, urge against said first operating plate 110, so that springs 111 are compressed (outer extracting members 11 retracted); when the mould S is set to its open position, the springs 111 cause the first operating plate 110 to move and set the first outer extracting members 11 to their extracted position.

All the second outer extracting members 12 are connected to a unique second operating plate 120, fit to simultaneously operate all of them according to an axial direction between three characteristic positions, respectively a retracted position, while the mould S is closed (see figures 3 and 4), extracted, while the mould S is open (see figures 3A and 4A) and an ejection position (see figures 3C and 4C).

The second operating plate 120 is arranged perpendicularly to said second outer extracting members 12; their retracted position is set by the pressure exerted by the second mould member 2 on corresponding stems, not shown, associated to the same second operating plate 120; its extracted position is determined by moving the above first operating plate 110, which acts against the second operating plate 120 by means of spacers.

While opening the mould S the above first and second outer extracting members 11,12 move synchronously, without any relative displacement between them.

The ejection position is attained by a further translation of the second operating plate 120 and, by consequence, by a translation of the second outer extracting members 12 with respect to the first outer extracting members 11, as will be better described in the following.

The prints 3 are arranged on rows F, so that their covers 5, once obtained by moulding, are arranged side by side in parallel.

According to a preferred, but not exclusive, embodiment of the present invention, the mould S features four parallel rows F of prints 3; in the two outer rows F the prints 3 have their cover portions oriented outwardly, while in the two inner rows F the cover portions are oriented inwardly.

A device for closing the stoppers covers 5 according to the present invention is embodied in the first mould member 1. The closing device comprises, for each row F of prints 3, closing means 6 comprising an idle roller, arranged with its axis parallel to the row F and long enough to engage all the covers 5 in the same row F.

The idle roller 6 of each row F is engaged with corresponding guiding members 7, which consist of cams having the form of shaped slots made in side plates 70. These latter are fixed to said first mould member 1, perpendicularly to the axis of the idle roller 6.

Each side plate 70 comprises four cams 7, each one being engaged with its corresponding idle roller 6 of each row F.

The side plates 70 project from the first mould member 1 towards the second mould member 2, which in turn comprises corresponding recesses, not shown, fit to receive the side plates 70 when the mould S is closed.

In the embodiment of the invention shown in the drawings, there are provided three side plates 70, which are arranged at both sides and in an intermediate position with respect of the idle rollers 6, so as to avoid any unwanted bending thereof.

Each cam 7 is fit to guide a roller 6 according to a predefined path, during an active trajectory (shown by an arrow A) between an idle position R and a end position T, and then back to the idle position R.

In order to allow the mould S to be correctly closed, in the first mould member 1 is provided, for each idle roller 6, a corresponding seat 16. Each seat 16 is arranged sideways of a row F of prints 3, near to the covers 5 side thereof. Seats 16 are fit to receive the idle rollers 6 when they are in their idle position R.

The aforesaid covers closing device 5 moreover comprises an operating mechanism 60, embedded in the same first mould member 1 and fit to simultaneously operate all the idle rollers 6, in order to move them on their active and return trajectories.

The above operating mechanism 60 comprises a series of bars 61, axially slidable in a parallel direction with respect to the above described first and second outer extracting members 11,12. All the bars 61 are integral with a unique auxiliary plate 160, which is perpendicular to the same bars 61 and which is interposed between first and second plates 110,120.

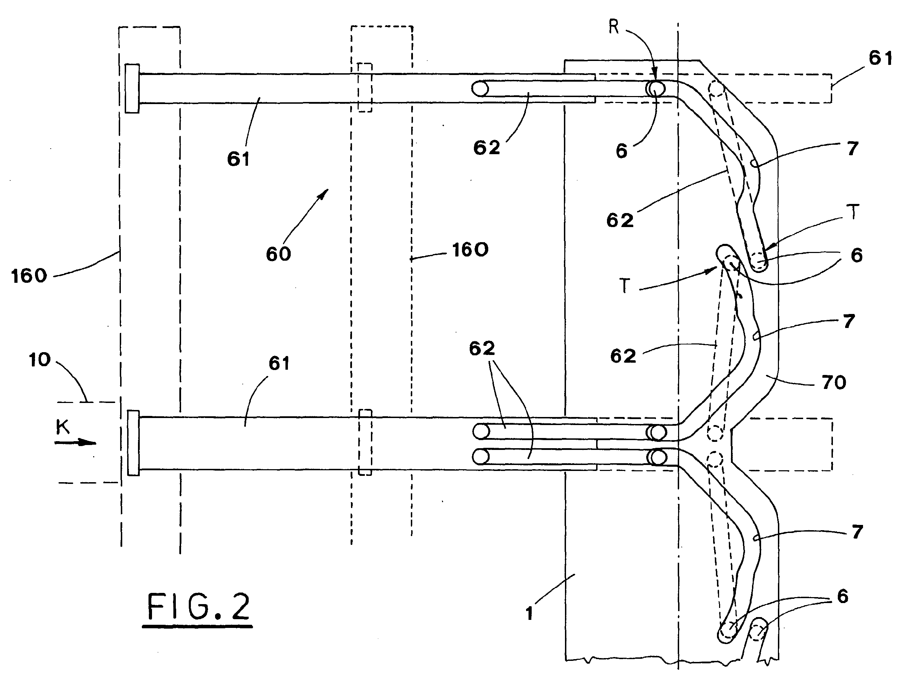

At the end of bars 61 opposite to the auxiliary plate 160 there are hinged the ends of a series of rods 62, which are capable to oscillate on a plane parallel to the one defined by the above described cams 7. The opposite ends of the rods 62 are engaged with the idle rollers 6, perpendicularly with respect to their longitudinal axis (see figure 2).

The auxiliary plate 160 is associated to one of the aforesaid linear actuators 10, which is able to operate according to a direction which is parallel to the longitudinal axis of said bars 61.

The operating phases of mould S will be described thereinafter, starting from a situation where the mould members 1,2 contact one each other, thus closing the same mould S (see figures 3 and 4).

As already stated, in the above situation happens that:
- the first and second outer extracting members 11,12 are in their retracted positions;
- the springs 111 are compressed by the first plate 110;
- the second plate 120 urges against the spacers 130;
- the idle rollers 6 are in their idle position R, inside their seats 16;
- the rods 62 are axially aligned with their bars 61 (see figure 2);
- the auxiliary plate is held in its retracted position by the actuator 10.

After that the plastic mouldable material has been injected into the prints 3, the mould S is held in its closed position for a predefined amount of time, in order to let the stoppers 4 and their covers 5 harden.

Mould S is then opened, by moving away the mould members 1,2 one with respect to each other (see figures 3A and 4A).

By consequence of this operation, the springs 111 act against the first plate 110, and move it until the auxiliary plate 160 is engaged, while the spacers 130 set the same, synchronous movement for the second plate 120; in this way, the first and second outer extracting members 11,12 are simultaneously moved to their extracted position, so pushing the stoppers 4 and their covers 5 out from their prints 3 (figure 3A).

The stoppers 4 are held in position as they are still mounted on the first outer extracting members 11, while the covers 5 are free to pivot according their hinge.

The linear actuator 10 is then operated, so moving the auxiliary plate 160 forward (arrow K). By consequence, the bars 61 move also forward, and they push the idle rollers 6, by means of the rods 62, on their active trajectory (arrow A), guided by the cams 7.

Said trajectory is such that the idle rollers 6 intercept the covers 5, which are still open at around 180° with respect to the stoppers 4 (see figure 3A). Subsequently, the idle rollers 6 lead the covers 5 to a pivoting movement around their hinges, until they close the stoppers 4.

It is to be noted that the rollers 6, because they are idle and do not slide against the covers 5, don't cause any damage to the covers 5 surface.

The complete closure of the stoppers 4 is obtained because in each cam 7 there is a curved area 7a which is such that the idle roller is lead to press with a vertical component against the central portion of the cover 5, thus operating a clicking tooth, of known type, made in the stopper 4 for keeping it closed (see figure 3B).

When the idle rollers 6 run in the curved area 7a, the auxiliary plate 160, which is pushed by the linear actuator 10, is going to contact the second plate 120 (figure 4B).

A further translation of the auxiliary plate 160 leads the idle rollers 6 to complete its active trajectory, and to reach its end position T; the rods 62, in this situation, are arranged with a given angle (dashed lines in figure 2) with respect to their bars 61.

The end position T is established so that the idle rollers 6 are off the trajectory of the closed stoppers 4 when they are expelled from the mould S by means of the second outer extracting members 12, in order to avoid any obstacle to the stoppers path when they are falling down from the mould S. The translation of said second outer extracting members 12 is driven from the second plate 120, when it is draft by the auxiliary plate 160 (see figures 3C and 4C).

The outward translation of the second outer extracting members 12 with respect to the first extracting members 11 allows the stoppers 4 to be removed from these latter. This is particularly useful, e.g., when the stoppers have an inner thread, which generates friction with the corresponding external surface of said first extracting members 11.

According to another embodiment, not shown, in the first extracting members 11 there is provided a suitable series of inner pipes, connected to the prints surface and to a source of compressed air. This would remove the stoppers easier.

As it is clearly visible in the attached drawings, the shape of the cams 7 from the curved portion 7a thereof to the end of cams is so that the active trajectory of the idle rollers 6 of an outer row F is slightly different from the active trajectory of the idle rollers 6 of an inner row **F**.

Said difference has been made because, once they have completed their cover closing task, all of the idle rollers 6 must be off the path of the stoppers 4 falling out from the mould S. So, in order to reduce the mould size, the end position of an idle roller 6 acting on an inner row F and the end position of an idle roller 6 acting on a corresponding outer row F are set, at different heights, on a plane laying vertically with respect to the surface of the first mould member 1, and between the two rows.

At this time the mould S has completed a moulding cycle, and the stoppers 4 so obtained are expelled with their covers 5 closed, as required. Before a new moulding cycle can occur, the auxiliary plate 160 is moved back, by means of the linear actuator 10. By consequence, the idle rollers are moved back to their idle position R and, subsequently, the first and second mould members 1,2 are moved to their closed position, thus returning the first and second plates 110,120 to their starting position.

Obviously, according to the present invention, a different driving devices could be used for driving the first and second plates 110,120, e.g. further linear actuators, without exiting from the scope of the invention.

From the above description there is a clear evidence that the closing device disclosed herein gives an easy and safe way for perfectly close the stoppers 4, thanks to the no-clearance, synchronous closing mechanism using the cams 7.

Another advantage of the present invention consists of a substantial reduction of the mould width with respect to the conventional ones, as all the components of the closing device lay inside the mould.

Moreover, the special structure of the closing device embedded in the present mould allows to obtain a mould carrying a number of prints much greater than the conventional moulds, thus increasing the mould productivity.

A further advantage is that all the mechanisms are interconnected by rigid, mechanical connections. This assures that the phase relationship between said mechanisms is perfectly settable, and there is no risk of any phase displacement.

The overall production costs of this mould is also substantially equal or less to those of the conventional moulds provided with external closing devices.

## Claims

1. Mould for making plastic stoppers provided with hinged covers, said stoppers (4) and covers (5) being obtained in an open configuration by means of injection of a liquid plastic material inside a series of prints (3), said prints (3) being defined by a first (1) and a second (2) mould members of said mould (S) staying in contact one each other, said mould (S) being provided with extracting members first (11) and second (12), embedded in said first mould member (1) at each of said prints (3), arranged coaxially with respect to said stopper (4) and driven by respective driving means (110,120) according to an axial direction, in a phase relationship with the opening sequence of said mould (S), for extracting and expelling said stoppers (4) from said mould (S), this latter being **characterised in that** it comprises:
a series of said prints (3), arranged in said mould (S) on at least one row (F), so that their covers are placed side by side;
closing means (6), embedded in said first mould member (1), fit to move on an active trajectory, from an idle position (R) to an end position (T), and a complementary return trajectory back to said idle position (R), in a phase relationship with the translation of said first (11) and second (12) extracting members, the active trajectory of said closing means (6) being defined by guiding members (7) engaged by said closing means (6), this latter being able to intercept said covers 5, when the stoppers (4) are partially pulled out from said first mould member (1) and their covers (5) are free to pivot around their hinge, to move them on a pivoting path until they close the corresponding stopper (4), and then to reach said end position (T) non interfering with the subsequent stoppers expelling phase of the mould (S) mechanisms;
for each one of said closing means (6), a hollow seat (16), obtained in the surface of said first mould member (1), sideways of said covers (5) the row (F), fit to receive said closing means (6) when they are in their idle position (R);
an operating mechanism (60) for said closing means (6), fit to drive it on its active an return trajectories.

2. Mould according to Claim 1, **characterised in that**, when it its operating position, the facing surface of said first (1) and second (2) mould members is substantially vertical.

3. Mould according to Claim 1, **characterised in that** it comprises four rows (F) of said prints (3), arranged parallel one to each other, the outer rows being arranged so that the print portions for covers (5) are oriented outwardly, and the inner rows being arranged so that the print portions for covers (5) are oriented inwardly.

4. Mould according to Claim 1, **characterised in that** said closing means (6), comprise, for each one of said rows (F) of prints (3), an idle roller, arranged with its axis parallel with respect to the same row (F) and being wider enough to engage all the covers (5) of said row (F).

5. Mould according to Claim 1 or Claim 4, **characterised in that** said guiding means (7) comprises a plurality of cams, consisting of shaped slots made in corresponding side plates (70), which are fixed to said first mould member (1) perpendicularly with respect to the idle roller (6), and protruding towards said second mould member (2).

6. Mould according to Claim 1 or Claim 5, **characterised in that** each one of said cams (7) comprises a curved portion (7a), aligned with the central area of said covers (5) fit to guide said idle roller (6) to a position wherein it urges on said covers (5) for closing them on their respective stoppers (4).

7. Mould according to Claim 5, **characterised in that** in each one of said side plates (70) there are provided four of said cams (7), each one being engaged with a respective idle roller (6) of all the rows (F) of prints (3).

8. Mould according to Claim 4 or Claim 5, **characterised in that** there are provided three side plates (70), parallel one with respect to each other and arranged sideways and in an intermediate position of said idle rollers (6).

9. Mould according to Claim 5, **characterised in that** in said second mould member (2) there are provided a plurality of recesses, fit to receive said side plates (70) when said mould (S) is in its closed configuration.

10. Mould according to Claim 1 or Claim 4, **characterised in that** said operating mechanism (60) comprises a series of bars (61), slidably movable according to an axial direction, and integral, at one first end, to an auxiliary plate (160), perpendicular to said bars (61), these latter having hinged to their opposite end corresponding rods (62), whose free ends are engaged with said rollers (6), said auxiliary plate (160) being driven by an actuator (10) for driving said active and return trajectories of said idle rollers (6).

11. Mould according to Claim 10, **characterised in that** said bars (61) are arranged parallel to said first and second extracting members (11,12).

12. Mould according to Claim 5 or Claim 10, **characterised in that** said rods (62) can oscillate on a plane parallel to the said cams (7).

13. Mould according to Claim 10, **characterised in that** said actuator (10) is a linear actuator, and operates on a direction which is parallel to the axis of said bars (61).

14. Mould according to Claim 1 or Claim 10, **characterised in that** said auxiliary plate (160) is also fit to engage and move said driving means (120) for said second extracting means (12) during said stoppers ejection phase.
